# FASCICULE DE BREVET EUROPEEN

(11) **EP 1 043 114 B1**
(45) Date de publication et mention de la délivrance du brevet: **01.10.2003**
(21) Numéro de dépôt: 00400884.3
(22) Date de dépôt: 30.03.2000
(51) Int. Cl.: B23Q 3/08, B65G 47/90, B25J 15/00

(54) **Dispositif pour robot de manipulation d'objets et procédé appliqué à ce dispositif**
Vorrichtung für einen Handhabungsroboter und auf diese angewendetes Verfahren
Device for an articles handling robot and process thereof

(30) Priorité: 02.04.1999 FR 9904146
(43) Date de publication de la demande: 11.10.2000
(73) Titulaire: CSEM Centre Suisse d'Electronique et de Microtechnique SA Recherche et Développement, 2007 Neuchâtel (CH)
(72) Inventeur: Depeursinge, Yves, 1077 Servion (CH); Genequand, Pierre-Marcel, 1209 Geneve (CH); El-Khoury, Mario, 1028 Preverenges (CH); Hoehener, Rémy, 2000 Neuchatel (CH); Michel, Jean-Bernard, 1426 Concise (CH)
(74) Mandataire: Colas, Jean-Pierre

(56) Documents cités:
- EP-A- 0 706 862
- DE-A- 3 701 874

## Description

La présente invention est relative à un dispositif pour robot de manipulation d'objets et à un procédé de manipulation d'objets avec un robot équipé d'un tel dispositif.

Ce procédé et ce dispositif sont particulièrement destinés aux industries de précision telles que l'industrie électronique ou l'industrie horlogère.

On connaît de la demande de brevet DE 37 01 874 un système pour robot de manipulation d'objets, comprenant:
- un organe de saisie réalisé en un matériau thermiquement conducteur, présentant au moins une surface de contact avec l'objet à saisir,
- des moyens de refroidissement dudit organe de saisie susceptibles de geler l'interface entre cet organe et ledit objet, entraînant ainsi leur solidarisation, comprenant des moyens locaux pour refroidir directement ledit organe de saisie, et des moyens périphériques pour refroidir lesdits moyens locaux,
- des moyens de chauffage dudit organe susceptibles de liquéfier ladite interface, entraînant ainsi la libération dudit objet, et
- des moyens pour commander lesdits moyens de refroidissement et lesdits moyens de chauffage.

Ce système permet de manipuler des objets de grandes dimensions tels que des pièces de textile, avec des cadences relativement élevées.

La présente invention a pour but de fournir un système du type susmentionné qui soit adapté à la manipulation de pièces de très faibles dimensions, et qui permette d'atteindre des cadences encore plus élevées.

On atteint ce but de l'invention avec un dispositif pour robot de manipulation d'objets, comprenant:
- un organe de saisie réalisé en un matériau thermiquement conducteur, présentant au moins une surface de contact avec l'objet à saisir,
- des moyens de refroidissement dudit organe de saisie susceptibles de geler l'interface entre cet organe et ledit objet, entraînant ainsi leur solidarisation, comprenant des moyens locaux pour refroidir directement ledit organe de saisie, et des moyens périphériques pour refroidir lesdits moyens locaux,
- des moyens de chauffage dudit organe susceptibles de liquéfier ladite interface, entraînant ainsi la libération dudit objet, et
- des moyens pour commander lesdits moyens de refroidissement et lesdits moyens de chauffage,
remarquable en ce que lesdits moyens locaux de refroidissement comprennent une paire d'éléments réfrigérants locaux montés de part et d'autre dudit organe de saisie, et en ce que lesdits moyens périphériques de refroidissement comprennent une paire d'éléments réfrigérants périphériques reliés auxdits éléments réfrigérants locaux par des bras formés dans un matériau à conductivité thermique élevée tel que le cuivre.

Grâce à cette structure particulière, on obtient un dispositif dans lequel l'organe de saisie présente une très petite surface de contact avec l'objet à saisir tout en présentant des surfaces d'échange thermique avec les éléments réfrigérants locaux suffisamment importantes pour permettre de refroidir très rapidement cet organe de saisie.

On obtient de la sorte un dispositif permettant de manipuler des pièces de très petites dimensions à une cadence très supérieure à celles de la technique antérieure.

La présente invention a également pour but de fournir un procédé de manipulation d'objets appliqué au dispositif susmentionné et adapté à un contexte de fabrication industrielle à cadences très élevées.

On atteint ce but de l'invention avec un procédé de manipulation d'objets avec un robot équipé d'un dispositif conforme à ce qui précède, remarquable en ce qu'il comprend les étapes consistant à:
- commander lesdits moyens périphériques de refroidissement de manière à maintenir lesdits moyens locaux de refroidissement dans un environnement dont la température est située au voisinage de la température de gel/dégel de ladite interface,
- amener ledit organe de saisie au dessus d'un objet à prendre,
- activer lesdits moyens locaux de refroidissement de manière à geler ladite interface pour saisir ledit objet,
- transporter ledit objet de l'endroit où il a été saisi jusqu'à l'endroit où il doit être déposé, et
- à activer lesdits moyens de chauffage de manière à liquéfier ladite interface pour déposer ledit objet.

D'autres caractéristiques et avantages de la présente invention apparaîtront à la lecture de la description qui va suivre et à l'examen du dessin annexé, dans lequel:
- la figure 1 est une vue en perspective partiellement arrachée du dispositif selon l'invention,
- la figure 2 est une vue schématique en coupe longitudinale du dispositif selon l'invention (les éléments réfrigérants locaux et périphériques ayant été représentés dans le même plan),
- les figures 3 à 5 sont des graphes représentant des signaux de commande engendrés par des moyens de commande du dispositif selon l'invention, et
- la figure 6 est un graphe représentant l'intensité d'un courant électrique appliqué aux éléments réfrigérants locaux du dispositif selon l'invention.

Sur ces figures, des références numériques identiques désignent des organes ou ensemble d'organes identiques ou analogues.

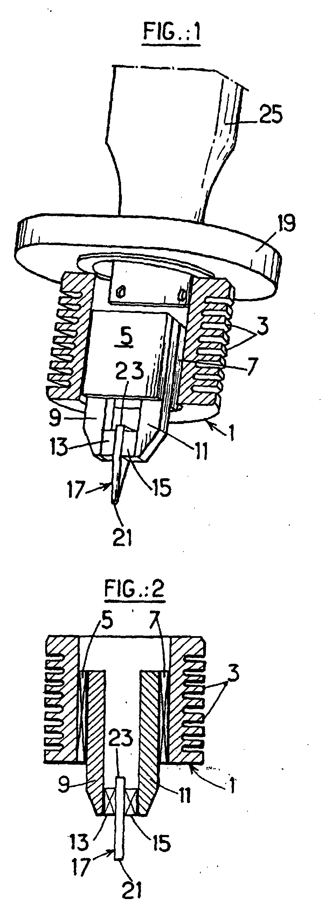

On se reporte à présent aux figures 1 et 2, sur lesquelles on voit que le dispositif selon l'invention comprend un carter 1 muni de préférence d'ailettes de refroidissement 3.

Une paire d'éléments réfrigérants périphériques 5, 7 placés en vis-à-vis est montée à l'intérieur de ce carter.

Une paire de bras 9, 11 placés en vis-à-vis est montée entre les deux éléments réfrigérants périphériques 5, 7.

Une paire d'éléments réfrigérants locaux 13, 15 placés en vis-à-vis est montée entre les deux bras 9, 11.

Un organe de saisie tel qu'une tête 17 est monté entre les deux éléments réfrigérants locaux 13, 15.

Le dispositif peut comprendre un flasque 19, adjacent au carter 1, et destiné à recevoir un boîtier de protection (non représenté).

De préférence, la tête de saisie 17 et la paire d'éléments réfrigérants locaux 13, 15 sont débrayables du reste du dispositif, grâce à des moyens (non représentés) à la portée de l'homme de l'art.

Le dispositif selon l'invention comprend en outre des moyens pour mesurer la température des deux bras 9, 11, pouvant consister en un thermocouple (non représenté).

De même, le dispositif selon l'invention comprend dès moyens pour mesurer la température de l'extrémité 21 de la tête de saisie 17 (non représentés). Ces moyens peuvent consister en un autre thermocouple ou, de manière avantageuse, en une thermistance assurant la double fonction de thermomètre et d'élément de chauffage.

Selon des variantes non représentées et décrites dans la demande de brevet français FR 2 725 651 :
- le dispositif selon l'invention peut comporter des moyens pour amener un flux d'air et/ou un liquide d'interface tel que de l'eau jusqu'à l'extrémité 21 de la tête de saisie 17;
- des éléments de chauffage tels qu'une résistance ou une bobine ou une fibre optique peuvent être placés le plus près possible cette extrémité 21.

La partie 23 de la tête de saisie 17 destinée à être interposée entre les deux éléments réfrigérants locaux 13, 15 peut être plate, et son extrémité 21 destinée à saisir les objets peut être cylindrique, comme cela est représenté.

Typiquement, la longueur de cette tête est située entre 5 et 10 mm, et la surface de son extrémité 21 est de l'ordre du millimètre carré.

Cette tête est formée dans un matériau à conductivité thermique élevée, tel que le cuivre ou le diamant synthétique, ou une combinaison de ces deux matériaux.

Chacun des éléments réfrigérants périphériques 5, 7 et locaux 13, 15 peuvent être formés par des éléments à effet Peltier, connus de l'homme de l'art.

Les deux bras 9, 11 sont formés dans un matériau à conductivité thermique élevée, tel que le cuivre.

Le dispositif selon l'invention est destiné à être fixé sur un robot 25 par tout moyen approprié à la portée de l'homme du métier.

Les paires d'éléments réfrigérants périphériques 5, 7 et locaux 13, 15, les éléments de chauffage et le robot 25 sont reliés par un faisceau de câbles électriques à un circuit de commande (non représenté).

Ce circuit de commande comprend, tout d'abord, des moyens pour maintenir les deux bras 9, 11 à une température sensiblement constante.

Ces moyens peuvent comprendre, typiquement, une boucle d'asservissement comparant la température effective des deux bras 9, 11 telle qu'elle est mesurée par le thermocouple susmentionné à une température de référence, et fournissant en sortie un signal d'activation de la paire d'éléments réfrigérants périphériques 5, 7 de manière à atteindre ladite température de référence.

Ce circuit de commande comprend par ailleurs des moyens pour adapter la température de l'extrémité 21 de la tête de saisie 17 aux différentes opérations à effectuer.

Ces moyens peuvent comprendre, tout d'abord, un générateur de signal périodique de position P qui passe de 0 à 1 à partir du moment où la tête de saisie 17 est placée au dessus de l'objet à saisir, et qui repasse à 0 une fois que cet objet a été saisi, transporté et déposé.

Dans l'exemple choisi, la période du signal P est d'environ 6 secondes.

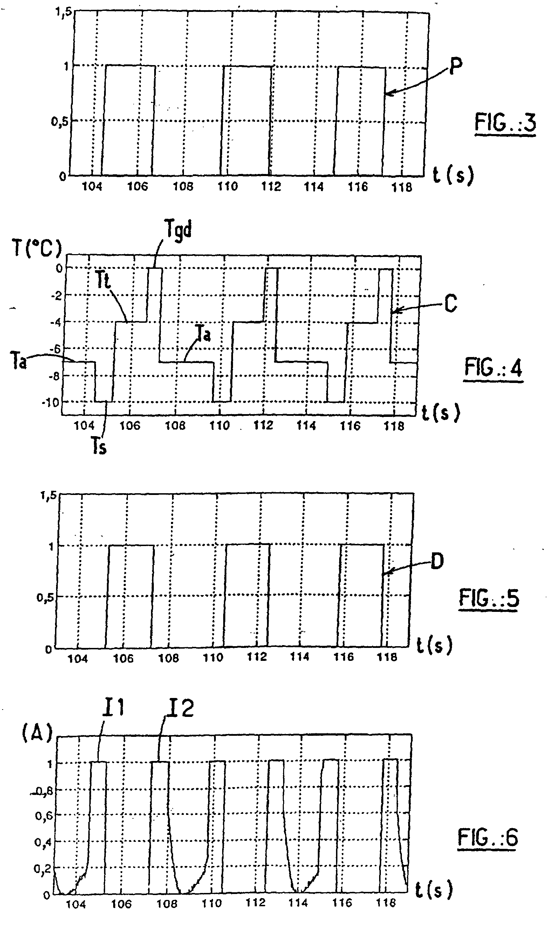

Ce signal est représenté sur le graphe de la figure 3, sur l'axe des abscisses duquel on a reporté le temps mesuré en secondes (ceci vaut également pour les graphes mentionnés ci-après).

Les moyens d'adaptation de la température de la tête de saisie 17 aux différentes opérations à effectuer comprennent par ailleurs un générateur de consigne de température C (voir figure 4), dont la valeur fixe la température que doit atteindre la tête de saisie 17 pendant les phases de saisie, de transport et de dépôt de l'objet concerné.

Lorsque le signal de position P passe de 0 à 1, c'est-à-dire au moment où la tête de saisie 17 arrive au dessus de l'objet à saisir, la consigne de température C passe d'une température d'attente Ta, située en dessous d'une température de gel/dégel Tgd, à une température de saisie Ts, inférieure à Ta.

La température de gel dégel/Tgd est la température à laquelle une substance située à l'interface entre l'extrémité 21 de la tête 17 et l'objet à saisir se solidifie ou liquéfie.

Cette substance peut être par exemple de l'eau provenant de l'humidité ambiante, ou, en variante, de l'eau amenée jusqu'à l'extrémité 21 par les moyens susmentionnés, éventuellement sous forme pulvérisée.

Pendant le transport de l'objet par la tête de saisie, la consigne de température C passe de la température Ts à une température de transport Tt supérieure à la température d'attente Ta et inférieure à la température de gel/dégel Tgd.

Lorsque le signal P repasse à 0, c'est-à-dire lorsque que l'objet transporté est arrivé à destination, la consigne de température C grimpe jusqu'à la température de gel/dégel Tgd.

Un court instant plus tard (environ 1 seconde dans l'exemple choisi), une fois que l'objet transporté a été déposé, la consigne de température C repasse à la température d'attente Ta.

Lorsqu'on utilise l'humidité ambiante ou de l'eau liquide ou pulvérisée comme substance d'interface entre la tête de saisie et l'objet à saisir, les températures mentionnées ci-dessus peuvent valoir, typiquement:
Tgd = 0°C,
Ta = -7°C,
Ts = -10°C,
Tt = -4°C.

Enfin, les moyens d'adaptation de la température de la tête de saisie 17 aux différentes opérations à effectuer comprennent des moyens pour porter cette tête à la température de la consigne de température C.

Ces moyens peuvent comprendre, typiquement, une boucle d'asservissement comparant la température effective de l'extrémité 21 de la tête de saisie 17 telle qu'elle est mesurée par le thermocouple (ou par la thermistance) susmentionné(e) à la consigne de température C, et fournissant comme signal de sortie un signal d'activation de la paire d'éléments réfrigérants locaux 13, 15 ou un signal d'activation des éléments de chauffage susmentionnés (thermistance, résistance, bobine, fibre optique), de manière à atteindre ladite température de consigne C.

Par ailleurs, le circuit de commande susmentionné comprend des moyens pour piloter les déplacements du robot 25 au cours des manipulations.

Ces moyens peuvent comprendre un générateur de signal de déplacement D (voir figure 5), dont la valeur indique quand il faut déplacer le robot 25 de sa position de saisie de l'objet concerné vers sa position de dépôt de cet objet, et inversement.

Le signal D passe de 0 à 1 lorsque la consigne de température C passe de la température de saisie Ts à la température de transport Tt, c'est-à-dire lorsque la tête de saisie 17 a saisi l'objet.

Le signal D repasse de 1 à 0 lorsque la consigne de température C passe de la température de gel/dégel Tgd à la température d'attente Ta, c'est-à-dire lorsque la tête de saisie 17 a déposé l'objet.

Le fonctionnement du dispositif selon l'invention découle directement de ce qui précède.

Avec la boucle d'asservissement de la paire d'éléments réfrigérants périphériques 5, 7, on maintient les deux bras 9, 11 sensiblement à la température de gel/dégel Tgd.

On maintient ainsi la paire d'éléments réfrigérants locaux 13, 15 dans un environnement dont la température est également située au voisinage de la température Tgd.

Les ailettes de refroidissement 3 du carter 1 permettent d'évacuer vers l'extérieur la chaleur dégagée par la paire d'éléments réfrigérants périphériques 5, 7. Selon une variante possible, on peut chasser les calories évacuées par un flux d'air engendré par exemple par un dispositif à vortex.

Avec la boucle d'asservissement de la paire d'éléments réfrigérants locaux et des éléments de chauffage susmentionnés (thermistance, résistance, bobine, fibre optique), on adapte la température de l'extrémité 21 de la tête de saisie 17 aux différentes opérations de saisie, de transport et de dépôt de l'objet concerné, selon les principes exposés ci-après.

Lorsqu'il est prévu d'amener une substance d'interface telle que de l'eau jusqu'à l'extrémité 21, la succession d'opérations décrites ci-après comprend l'étape préalable consistant à asperger l'objet à saisir avec cette substance.

Lorsque la consigne de température C passe de la température d'attente Ta à la température de saisie Ts, on active la paire d'éléments réfrigérants locaux 13, 15. On gèle ainsi l'interface entre cette tête et l'objet à saisir, ce qui permet de les solidariser entre eux.

Lorsque les éléments réfrigérants locaux 13, 15 sont des éléments à effet Peltier, on réalise cette activation en leur appliquant ponctuellement un courant électrique « de refroidissement » I1, dont la mesure en ampères est représentée sur le graphe de la figure 6.

Du fait que la paire d'éléments réfrigérants locaux 13, 15 est placée dans un environnement dont la température avoisine en permanence la température Tgd, l'activation de ces éléments permet d'abaisser très rapidement la température de l'extrémité 21 de la tête de saisie 17 en dessous de la température Tgd.

On notera ici qu'un phénomène de surfusion peut apparaître lorsqu'on abaisse brutalement la température de l'extrémité 21 de la tête de saisie 17, empêchant ainsi de geler l'interface.

Les risques pour que ce phénomène survienne augmentent lorsqu'on utilise un liquide d'interface sous forme pulvérisée.

Le recours à un matériau tel que le diamant synthétique pour revêtir l'extrémité 21 de la tête de saisie 17 ou pour former l'intégralité de celle-ci permet de s'affranchir du phénomène de surfusion.

Selon une variante, on peut s'affranchir de ce phénomène en associant certains additifs, comme l'iodine, au liquide d'interface.

Lorsque la température de consigne C passe de la température de saisie Ts à la température de transport Tt, on laisse augmenter la température de la tête de saisie 17 d'elle-même, sous l'effet de la température de l'air ambiant.

Pour ce faire, on n'active ni la paire d'éléments réfrigérants locaux 13, 15, ni les éléments de chauffage susmentionnés.

Etant donné que la température de transport Tt est inférieure à la température de gel/dégel Tgd, on est sûr que l'interface entre la tête de saisie et l'objet reste gelée, et donc que cette tête peut se déplacer sans que cet objet risque de se décrocher.

Lorsque la température de consigne C passe de la température de transport Tt à la température de gel/dégel Tgd, on active les éléments de chauffage susmentionnés. On liquéfie ainsi l'interface entre cette tête et l'objet transporté, ce qui permet de déposer cet objet à l'endroit voulu.

Selon une variante envisageable lorsque les éléments réfrigérants locaux 13, 15 sont des éléments à effet Peltier, on peut chauffer la tête de saisie 17 en appliquant à ces éléments un courant électrique « de chauffage », de sens opposé à celui du courant « de refroidissement » susmentionné. Cette option présente l'inconvénient d'entraîner une usure plus rapide de ces éléments.

Le fait de laisser augmenter la température de la tête de saisie à partir de la température de saisie Ts permet d'anticiper le chauffage de cette tête jusqu'à la température Tgd, et ainsi de liquéfier de manière quasi instantanée l'interface entre la tête et l'objet lorsqu'on souhaite déposer ce dernier.

Lorsque la consigne de température passe de la température de gel/dégel Tgd à la température d'attente Ta, on active à nouveau la paire d'éléments réfrigérants locaux 13, 15.

Lorsque les éléments réfrigérants locaux 13, 15 sont des éléments à effet Peltier, on réalise cette activation en leur appliquant à nouveau ponctuellement un courant « de refroidissement » I2 représenté sur la figure 6.

Le fait d'abaisser la température de la tête de saisie 17 jusqu'à la température d'attente Ta permet d'anticiper le refroidissement de cette tête jusqu'à la température de saisie Ts, et ainsi de geler de manière quasi instantanée l'interface entre la tête et l'objet lorsqu'on souhaite saisir ce dernier.

Selon une variante envisageable lorsque les éléments réfrigérants locaux 13, 15 sont des éléments à effet Peltier, pour amener rapidement la tête de saisie 17 à la température voulue sans pour autant être pénalisé par son inertie thermique, on peut prévoir que les intensités des courants « de refroidissement » et « de chauffage » susmentionnés puissent prendre sélectivement une valeur absolue importante Imax ou faible Imin, selon respectivement que l'écart entre la température effective de la tête et la consigne de température C est important ou non.

Pour piloter les déplacements du robot 25 entre l'endroit où l'objet concerné doit être saisi et l'endroit où il doit être déposé, on utilise le signal de déplacement D.

Lorsque ce signal vaut 1, on déplace le robot 25 de l'endroit où l'objet a été saisi vers l'endroit où il doit être déposé. Lorsque ce signal vaut 0, on fait l'inverse.

Comme on peut le comprendre à présent, le dispositif selon l'invention permet, de par sa structure, de prévoir une tête de saisie 17 qui présente une petite surface de contact avec l'objet à saisir tout en présentant des surfaces d'échange thermique avec les éléments réfrigérants locaux 13, 15 suffisamment importantes pour permettre de refroidir très rapidement cette tête de saisie.

On obtient de la sorte un dispositif permettant de manipuler des pièces de très petites dimensions à une cadence très supérieure à celles de la technique antérieure.

Comme on l'a vu, d'autres facteurs contribuent à raccourcir les cycles de refroidissement/chauffage de la tête de saisie 17 :
- la structure « à double étage » des moyens de refroidissement,
- l'anticipation sur les températures de gel et de dégel, permettant d'atténuer les effets de retard dus à l'inertie thermique de la tête de saisie, et
- dans le cas où l'on utilise des éléments à effet Peltier, l'application de courants d'intensité variable selon l'écart de température à franchir, permettant également d'atténuer les effets indésirables dus à l'inertie thermique de la tête de saisie.

On remarquera également que la géométrie du dispositif selon l'invention se prête facilement à des opérations de montage et de démontage de la tête de saisie.

Ainsi, contrairement aux systèmes de la technique antérieure, on peut remplacer une tête de saisie par une autre (différente ou identique, selon les cas) sans avoir à remplacer l'intégralité du dispositif.

Tous ces avantages rendent le dispositif selon l'invention particulièrement adapté à un contexte de fabrication industrielle de précision à cadences très élevées.

Bien entendu, l'invention n'est pas limitée au mode de réalisation décrit et représenté, fourni à titre d'exemple illustratif et non limitatif.

C'est ainsi par exemple que l'on pourrait utiliser des moyens mécaniques (doigt commandé par un électro-aimant, flux d'air comprimé...) ou des ultrasons en combinaison avec les moyens de chauffage susmentionnés pour contribuer au décrochement de l'objet transporté de la tête de saisie.

C'est ainsi également que l'on pourrait prévoir des moyens destinés à détecter une chute prématurée de l'objet transporté.

Etant donné qu'il a été constaté qu'une telle chute entraînait une brusque variation de température dans la tête de saisie, lesdits moyens pourraient comprendre un circuit permettant de détecter de telles variations de température.

C'est ainsi également que l'on pourrait prévoir des moyens destinés à éviter tout contact physique entre la tête de saisie et l'objet à prendre. De tels moyens peuvent s'avérer nécessaires lorsque l'objet à saisir est extrêmement fragile.

Ces moyens pourraient comprendre, par exemple, une fibre optique située à l'intérieur de la tête de saisie et permettant d'observer des variations d'indices de réfraction dans l'interface entre cette tête et l'objet à saisir.

Selon une autre variante, ces moyens pourraient comprendre un circuit de détection des variations de température occasionnées par la mise en contact du liquide d'interface avec la tête de saisie juste avant la préhension de l'objet (un tel circuit serait analogue à celui mentionné ci-avant).

## Revendications

1. Dispositif pour robot (25) de manipulation d'objets, comprenant:
- un organe de saisie (17) réalisé en un matériau thermiquement conducteur, présentant au moins une surface de contact (21) avec l'objet à saisir,
- des moyens de refroidissement dudit organe de saisie (17) susceptibles de geler l'interface entre cet organe et ledit objet, entraînant ainsi leur solidarisation, comprenant des moyens locaux (13, 15) pour refroidir directement ledit organe de saisie (17), et des moyens périphériques (5, 7) pour refroidir lesdits moyens locaux (13, 15),
- des moyens de chauffage dudit organe (17) susceptibles de liquéfier ladite interface, entraînant ainsi la libération dudit objet, et
- des moyens pour commander lesdits moyens de refroidissement (5, 7; 13, 15) et lesdits moyens de chauffage,
**caractérisé en ce que** lesdits moyens locaux de refroidissement comprennent une paire d'éléments réfrigérants locaux (13, 15) montés de part et d'autre dudit organe de saisie (17), et **en ce que** lesdits moyens périphériques de refroidissement comprennent une paire d'éléments réfrigérants périphériques (5, 7) reliés auxdits éléments réfrigérants locaux (13, 15) par des bras (9, 11) formés dans un matériau à conductivité thermique élevée tel que le cuivre.

2. Dispositif selon la revendication 1, **caractérisé en ce qu'**il comprend une paire de bras (9, 11) placés en vis-à-vis et montés entre lesdits éléments réfrigérants périphériques (5, 7), et **en ce que** lesdits éléments réfrigérants locaux (13, 15) sont montés entre lesdits deux bras (9, 11).

3. Dispositif selon l'une des revendications 1 ou 2, **caractérisé en ce que** lesdits éléments réfrigérants locaux (13, 15) et périphériques (5, 7) sont des éléments à effet Peltier.

4. Dispositif selon l'une quelconque des revendications 1 à 3, **caractérisé en ce que** la partie (23) dudit organe de saisie (17) interposée entre lesdits éléments réfrigérants locaux (13, 15) est plate, et **en ce que** l'extrémité (21) de cet organe destinée à saisir des objets est cylindrique.

5. Dispositif selon l'une quelconque des revendications 1 à 4, **caractérisé en ce que** ledit organe de saisie (17) et ladite paire d'éléments réfrigérants locaux (13, 15) sont débrayables du reste du dispositif.

6. Dispositif selon l'une quelconque des revendications 1 à 5, **caractérisé en ce que** ledit organe de saisie (17) est formée dans un matériau à conductivité thermique élevée choisi dans le groupe comprenant le cuivre, le diamant synthétique et une combinaison de ces deux matériaux.

7. Dispositif selon l'une quelconque des revendications 1 à 6, **caractérisé en ce que** lesdits moyens de chauffage sont placés le plus près possible de l'extrémité (21) dudit organe de saisie (17), et **en ce qu'**ils comprennent des éléments choisis dans le groupe comprenant les thermistances, les résistances, les bobines et les fibres optiques.

8. Dispositif selon l'une quelconque des revendications 1 à 7, **caractérisé en ce que** lesdits moyens de commande comprennent des moyens pour asservir lesdits moyens locaux de refroidissement (13, 15) et lesdits moyens de chauffage à une consigne de température (C) définie en fonction des opérations à effectuer, et **en ce qu'**ils comprennent des moyens pour asservir lesdits moyens périphériques de refroidissement (5, 7) à une température de référence située au voisinage de la température de gel/dégel (Tgd) de ladite interface.

9. Dispositif selon la revendication 8, **caractérisé en ce que** lesdits moyens d'asservissement comprennent des moyens de mesure de température choisis dans le groupe comprenant les thermocouples et les thermistances.

10. Dispositif selon l'une quelconque des revendications 1 à 9, **caractérisé en ce qu'**il comprend des moyens pour piloter les déplacements dudit robot (25) au cours des manipulations.

11. Dispositif selon l'une quelconque des revendications 1 à 10, **caractérisé en ce qu'**il comprend des moyens (1, 3) pour évacuer vers l'extérieur la chaleur dégagée par lesdits moyens périphériques de refroidissement (5, 7).

12. Dispositif selon la revendication 11, **caractérisé en ce que** lesdits moyens d'évacuation de chaleur sont choisis dans le groupe comprenant un carter (1) à ailettes de refroidissement (3) et des moyens de flux d'air.

13. Dispositif selon l'une quelconque des revendications 1 à 12, **caractérisé en ce qu'**il comprend des moyens pour amener un liquide d'interface jusqu'à l'extrémité (21) dudit organe de saisie (17).

14. Dispositif selon la revendication 13, **caractérisé en ce que** ledit liquide d'interface est de l'eau.

15. Dispositif selon rune quelconque des revendications 1 à 14, **caractérisé en ce qu'**il comprend des moyens pour faciliter le décrochement d'un objet transporté par ledit organe de saisie (17).

16. Dispositif selon la revendication 15, **caractérisé en ce que** lesdits moyens de décrochement sont choisis dans le groupe comprenant un doigt commandé par un électro-aimant, des moyens de flux d'air comprimé et des ultrasons.

17. Dispositif selon l'une quelconque des revendications 1 à 16, **caractérisé en ce qu'**il comprend des moyens pour détecter la chute prématurée d'un objet transporté.

18. Dispositif selon la revendication 17, **caractérisé en ce que** lesdits moyens de détection comprennent un circuit adapté pour détecter les variations de température dans ledit organe de saisie (17).

19. Dispositif selon l'une quelconque des revendications 1 à 18, **caractérisé en ce qu'**il comprend des moyens pour éviter tout contact physique entre ledit organe de saisie (17) et un objet à prendre.

20. Dispositif selon la revendication 19, **caractérisé en ce que** lesdits moyens pour éviter tout contact physique sont choisis dans le groupe comprenant une fibre optique située à l'intérieur de l'organe de saisie, adaptée pour observer des variations d'indices de réfraction dans ladite interface, et un circuit adapté pour détecter les variations de température dans ledit organe de saisie (17).

21. Procédé de manipulation d'objets avec un robot (25) équipé d'un dispositif conforme à l'une quelconque des revendications 1 à 20, **caractérisé en ce qu'**il comprend les étapes consistant à:
- commander lesdits moyens périphériques de refroidissement (5, 7) de manière à maintenir lesdits moyens locaux de refroidissement (13, 15) dans un environnement dont la température est située au voisinage de la température de gel/dégel (Tgd) de ladite interface,
- amener ledit organe de saisie (17) au dessus d'un objet à prendre,
- activer lesdits moyens locaux de refroidissement (13, 15) de manière à geler ladite interface pour saisir ledit objet,
- transporter ledit objet de l'endroit où il a été saisi jusqu'à l'endroit où il doit être déposé, et
- à activer lesdits moyens de chauffage de manière à liquéfier ladite interface pour déposer ledit objet.

22. Procédé selon la revendication 21, **caractérisé en ce qu'**il comprend l'étape consistant à activer lesdits moyens locaux de refroidissement (13, 15) préalablement à la saisie dudit objet, de manière à geler quasi instantanément ladite interface lors de ladite saisie.

23. Procédé selon l'une des revendications 21 ou 22, **caractérisé en ce qu'**il comprend l'étape consistant à laisser ledit organe de saisie (17) se réchauffer à l'air ambiant préalablement au dépôt dudit objet, de manière à liquéfier quasi instantanément ladite interface lors dudit dépôt.

24. Procédé selon l'une quelconque des revendications 21 à 23 lorsqu'elles dépendent des revendications 3 et 8, **caractérisé en ce qu'**il comprend l'étape consistant à choisir l'intensité du courant électrique appliqué auxdits éléments Peltier locaux (13, 15) en fonction de l'écart entre la température effective dudit organe de saisie et ladite consigne de température (C).

25. Procédé selon l'une quelconque des revendications 21 à 24 lorsqu'elles dépendent de la revendication 3, **caractérisé en ce que** ladite étape d'activation des moyens de chauffage consiste à appliquer un courant électrique « de chauffage » auxdits éléments Peltier locaux (13, 15).

26. Procédé selon l'une quelconque des revendications 21 à 25 lorsqu'elles dépendent des revendications 13 ou 14, **caractérisé en ce qu'**il comprend l'étape consistant asperger ledit objet avec ledit liquide d'interface préalablement à la saisie de cet objet.

## Patentansprüche

1. Vorrichtung für einen Roboter (25) zum Handhaben von Gegenständen, mit:
- einem Greiferelement (17), das aus einem wärmeleitenden Material hergestellt ist und mindestens eine Kontaktfläche (21) für einen Kontakt mit dem zu ergreifenden Gegenstand aufweist,
- Mitteln zum Kühlen des Greiferelementes (17), die in der Lage sind, die Zwischenfläche zwischen diesem Element und dem Gegenstand zu gefrieren und somit ihre Erstarrung herbeizuführen, welche Kühlmittel örtliche Mittel (13, 15) zum unmittelbaren Kühlen des Greiferelementes (17) und periphere Mittel (5, 7) zum Kühlen der örtlichen Mittel (13, 15) aufweisen,
- Mitteln zum Erwärmen des Greiferelementes (17), die in der Lage sind, die Zwischenfläche zu verflüssigen und somit die Freigabe des Gegenstandes herbeizuführen, und
- Mitteln zum Steuern der Kühlmittel (5, 7; 13, 15) und der Erwärmungsmittel,
**dadurch gekennzeichnet, dass** die örtlichen Kühlmittel zwei örtliche Kälteelemente (13, 15) aufweisen, die beidseitig zu dem Greiferelement (17) angeordnet sind, und dass die peripheren Kühlmittel zwei periphere Kälteelemente (5, 7) aufweisen, die mit den örtlichen Kälteelementen (13, 15) durch Arme (9, 11) verbunden sind, die aus einem Material hoher Wärmeleitfähigkeit wie Kupfer gebildet sind.

2. Vorrichtung nach Anspruch 1, **dadurch gekennzeichnet, dass** sie zwei Arme (9, 11) aufweist, die gegenüberliegend angeordnet und zwischen den peripheren Kälteelementen (5, 7) montiert sind, und dass die örtlichen Kälteelemente (13, 15) zwischen den beiden Armen (9, 11) montiert sind.

3. Vorrichtung nach Anspruch 1 oder 2, **dadurch gekennzeichnet, dass** die örtlichen (13, 15) und peripheren (5, 7) Kälteelemente Peltier-Elemente sind.

4. Vorrichtung nach einem der Ansprüche 1 bis 3, **dadurch gekennzeichnet, dass** der zwischen den örtlichen Kälteelementen (13, 15) angeordnete Teil (23) des Greiferelementes (17) eben ist und dass das zum Ergreifen der Gegenstände dienende Ende (21) des Greiferelementes zylindrisch ist.

5. Vorrichtung nach einem der Ansprüche 1 bis 4, **dadurch gekennzeichnet, dass** das Greiferelement (17) und die beiden örtlichen Kälteelemente (13, 15) vom Rest der Vorrichtung abkuppelbar sind.

6. Vorrichtung nach einem der Ansprüche 1 bis 5, **dadurch gekennzeichnet, dass** das Greiferelement (17) aus einem Material hoher Wärmeleitfähigkeit besteht, das aus der Gruppe Kupfer, synthetischer Diamant und einer Kombination dieser Materialien ausgewählt ist.

7. Vorrichtung nach einem der Ansprüche 1 bis 6, **dadurch gekennzeichnet, dass** die Erwärmungsmittel so nahe wie möglich am Ende (21) des Greiferelementes (17) angeordnet sind und dass sie Elemente aufweisen, die aus der Gruppe der Thermistoren, Widerstände, Spulen und Lichtleitfasern ausgewählt sind.

8. Vorrichtung nach einem der Ansprüche 1 bis 7, **dadurch gekennzeichnet, dass** die Steuermittel Mittel aufweisen, um die örtlichen Kühlmittel (13, 15) und die Erwärmungsmittel auf eine Solltemperatur (C) zu regeln, die in Abhängigkeit von durchzuführenden Vorgängen definiert ist, und dass sie Mittel aufweisen, um die peripheren Kühlmittel (5, 7) auf eine Bezugstemperatur zu regeln, die nahe an der Gefrier-/Abtautemperatur (Tgd) der Zwischenfläche liegt.

9. Vorrichtung nach Anspruch 8, **dadurch gekennzeichnet, dass** die Regelmittel Temperaturmessmittel aufweisen, die aus der Gruppe der Thermoelemente und Thermistoren ausgewählt sind.

10. Vorrichtung nach einem der Ansprüche 1 bis 9, **dadurch gekennzeichnet, dass** sie Mittel zum Führen der Verstellbewegungen des Roboters (25) im Verlauf der Handhabungsvorgänge aufweist.

11. Vorrichtung nach einem der Ansprüche 1 bis 10, **dadurch gekennzeichnet, dass** sie Mittel (1, 3) aufweist, um die von den peripheren Kühlmitteln (5, 7) freigesetzte Wärme nach außen abzuführen.

12. Vorrichtung nach Anspruch 11, **dadurch gekennzeichnet, dass** die Mittel zum Abführen der Wärme aus der Gruppe ausgewählt wird, die aus einem Gehäuse (1) mit Kühlrippen (3) und Luftstrommitteln besteht:

13. Vorrichtung nach einem der Ansprüche 1 bis 12, **dadurch gekennzeichnet, dass** sie Mittel aufweist, um eine Zwischenflächenflüssigkeit bis zum Ende (21) des Greiferelementes (17) zuzuführen.

14. Vorrichtung nach Anspruch 13, **dadurch gekennzeichnet, dass** die Zwischenflächenflüssigkeit Wasser ist.

15. Vorrichtung nach einem der Ansprüche 1 bis 14, **dadurch gekennzeichnet, dass** sie Mittel aufweist, um das Abnehmen eines von dem Greiferelement (17) transportierten Gegenstandes zu erleichtern.

16. Vorrichtung nach Anspruch 15, **dadurch gekennzeichnet, dass** die Abnahmemittel aus der Gruppe ausgewählt sind, die aus einem von einem Elektromagneten gesteuerten Finger, Druckluft-Strömungsmitteln und Ultraschall besteht.

17. Vorrichtung nach einem der Ansprüche 1 bis 16, **dadurch gekennzeichnet, dass** sie Mittel zum Detektieren eines vorzeitigen Falls eines transportierten Gegenstandes aufweist.

18. Vorrichtung nach Anspruch 17, **dadurch gekennzeichnet, dass** die Detektormittel eine Schaltung aufweisen, die in der Lage ist, Temperaturänderungen in dem Greiferelement (17) zu detektieren.

19. Vorrichtung nach einem der Ansprüche 1 bis 18, **dadurch gekennzeichnet, dass** sie Mittel aufweist, um jeglichen physischen Kontakt zwischen dem Greiferelement (17) und einem zu erfassenden Gegenstand zu vermeiden.

20. Vorrichtung nach Anspruch 19, **dadurch gekennzeichnet, dass** die Mittel zum Vermeiden jeglichen physischen Kontaktes ausgewählt sind aus der Gruppe, bestehend aus einer Lichtleitfaser, die im Inneren des Greiferelementes angeordnet und in der Lage ist, Änderungen des Brechungsindexes in der Zwischenfläche zu beobachten, und einer Schaltung, die in der Lage ist, die Temperaturänderungen im Greiferelement (17) zu detektieren.

21. Verfahren zum Handhaben von Gegenständen mit einem Roboter (25), der mit einer Vorrichtung gemäß einem der Ansprüche 1 bis 20 ausgerüstet ist, **dadurch gekennzeichnet, dass** es die folgenden Schritte aufweist:
- Steuern der peripheren Kühlmittel (5, 7) in der Weise, dass die örtlichen Kühlmittel (13, 15) in einer Umgebung gehalten werden, in der die Temperatur nahe der Gefrier-/Abtautemperatur (Tgd) der Zwischenfläche liegt,
- Zuführen des Greiferelementes (17) in einen Bereich oberhalb eines zu erfassenden Gegenstandes,
- Aktivieren der örtlichen Kühlmittel (13, 15) zum Gefrieren der Zwischenfläche, um den Gegenstand zu ergreifen,
- Transportieren des Gegenstandes von der Stelle, an der er ergriffen wurde, bis zu der Stelle, an der er abgelegt werden soll, und
- Aktivieren der Erwärmungsmittel zum Verflüssigen der Zwischenfläche, um den Gegenstand abzulegen.

22. Verfahren nach Anspruch 21, **dadurch gekennzeichnet, dass** es einen Schritt umfasst, der darin besteht, die örtlichen Kühlmittel (13, 15) vor dem Ergreifen des Gegenstandes so zu aktivieren, dass die Zwischenfläche beim Ergreifen gewissermaßen augenblicklich gefroren wird.

23. Verfahren nach Anspruch 21 oder 22, **dadurch gekennzeichnet, dass** es einen Schritt umfasst, der darin besteht, dass man das Greiferelement (17) sich mittels Umgebungsluft vor dem Ablegen des Gegenstandes wieder erwärmen lässt, derart, dass die Zwischenfläche beim Ablegen gewissermaßen augenblicklich verflüssigt wird.

24. Verfahren nach einem der Ansprüche 21 bis 23, soweit sie von den Ansprüchen 3 und 8 abhängig sind, **dadurch gekennzeichnet, dass** es einen Schritt umfasst, der darin besteht, dass die Stärke des an die örtlichen Peltier-Elemente (13, 15) angelegten elektrischen Stroms in Abhängigkeit von der Differenz zwischen der Ist-Temperatur des Greiferelementes und der Soll-Temperatur (C) gewählt wird.

25. Verfahren nach einem der Ansprüche 21 bis 24, soweit sie vom Anspruch 3 abhängig sind, **dadurch gekennzeichnet, dass** der Schritt zum Aktivieren der Erwärmungsmittel darin besteht, einen elektrischen "Erwärmungs"-Strom an die örtlichen Peltier-Elemente (13, 15) anzulegen.

26. Verfahren nach einem der Ansprüche 21 bis 25, soweit sie von Anspruch 13 oder 14 abhängig sind, **dadurch gekennzeichnet, dass** es einen Schritt umfasst, der darin besteht, den Gegenstand mit der Zwischenflächenflüssigkeit zu besprühen, ehe der Gegenstand ergriffen wird.

## Claims

1. An object manipulator robot (25) device including:
- a pick-up member (17) made from a thermally conductive material and having at least one surface of contact (21) with the object to be picked up,
- means for cooling said pick-up member (17) adapted to freeze the interface between said member and said object, thus fastening them together, including local means (13, 15) for cooling said pick-up member (17) directly and peripheral means (5, 7) for cooling said local means (13, 15),
- means for heating said member (17) adapted to liquefy said interface, so releasing said object, and
- control means for said cooling means (5, 7; 13, 15) and said heating means,
**characterized in that** said local cooling means include a pair of local cooling elements (13, 15) mounted on respective opposite sides of said pick-up member, and **in that** said peripheral cooling means include a pair of peripheral cooling elements (5, 7) connected to said local cooling elements (13, 15) by arms (9, 11) made from a material of high thermal conductivity, such as copper.

2. The device claimed in claim 1, **characterized in that** it includes a pair of facing arms (9, 11) mounted between said peripheral cooling elements (5, 7), and **in that** said local cooling elements (13, 15) are mounted between said two arms (9, 11).

3. The device claimed in claim 1 or 2, **characterized in that** said local cooling elements (13, 15) and said peripheral cooling elements (5, 7) are Peltier effect components.

4. The device claimed in any of claims 1 to 3, **characterized in that** said pick-up member (17) has a flat part (23) between said local cooling elements (13, 15), and **in that** the end (21) of said member is adapted to pick up said objects is cylindrical.

5. The device claimed in any of claims 1 to 4, **characterized in that** said pick-up member (17) and said pair of local cooling elements (13, 15) are removable from the remainder of said device.

6. The device claimed in any of claims 1 to 5, **characterized in that** said pick-up member (17) is made of a material of high thermal conductivity chosen from the group comprising copper, synthetic diamond and a combination of those two materials.

7. The device claimed in any of claims 1 to 6, **characterized in that** said heating means are placed as close as possible to the end (21) of said pick-up member (17), and **in that** they include components chosen from the group comprising thermistors, resistors, coils and optical fibers.

8. The device claimed in any of claims 1 to 7, **characterized in that** said control means include means for slaving said local cooling means (13, 15) and said heating means to a temperature set point (C) defined as a function of the operations to be effected, and **in that** they include feedback means for regulating said peripheral cooling means (5, 7) according to a reference temperature in the vicinity of a freezing/thawing temperature (Tgd) of said interface.

9. The device claimed in claim 8, **characterized in that** said control means include temperature measuring means chosen from the group comprising thermocouples and thermistors.

10. The device claimed in any of claims 1 to 9, **characterized in that** it comprises including means for controlling displacements of said robot (25) during manipulations.

11. The device claimed in any of claims 1 to 10, **characterized in that** said it comprises means (1, 3) for evacuating to the exterior heat dissipated by said peripheral cooling means (5, 7).

12. The device claimed in claim 11, **characterized in that** said heat evacuating means are chosen from the group comprising a casing (1) with cooling fins (3) and air flow means.

13. The device claimed in any of claims 1 to 12, **characterized in that** it comprises means for feeding an interface liquid to said end (21) of said pick-up member (17).

14. The device claimed in claim 13, **characterized in that** said interface liquid is water.

15. The device claimed in any of claims 1 to 14, **characterized in that** it comprises means to facilitate release of an object transported by said pick-up member (17).

16. The device claimed in claim 15, **characterized in that** said release means are chosen from the group comprising a finger operated by a solenoid, compressed air flow means and ultrasound.

17. The device claimed in any of claims 1 to 16, **characterized in that** it comprises means for detecting premature dropping of a transported object.

18. The device claimed in claim 17, **characterized in that** said detector means comprise a circuit adapted to detect temperature variations in said pick-up member (17).

19. The device claimed in any of claims 1 to 18, **characterized in that** it comprises means for preventing physical contact between said pick-up member (17) and an object to be picked up.

20. The device claimed in claim 19, **characterized in that** said means for preventing physical contact are chosen from the group comprising an optical fiber inside said pick-up member adapted to observe refractive index variations in said interface and a circuit adapted to detect temperature variations in said pick-up member (17).

21. A method of manipulating objects with a robot (25) equipped with a device as claimed in any of claims 1 to 20, **characterized in that** it comprises the following steps:
- controlling said peripheral cooling means (5, 7) so that they maintain said local cooling means (13, 15) in an environment in which the temperature is in the vicinity of said freezing/thawing temperature (Tgd) of said interface,
- placing said pick-up member (17) above an object to be picked up,
- activating said local cooling means (13, 15) to freeze said interface to pick up said object,
- transporting said object from the location where it was picked up to a location at which it must be put down, and
- activating said heating means to liquefy said interface to put down said object.

22. The method claimed in claim 21, **characterized in that** it comprises the step of activating said local cooling means (13, 15) before picking up said object, so as to freeze said interface virtually instantaneously when said object is picked up.

23. The method claimed in claim 21 or 22, **characterized in that** it comprises the step of allowing said pick-up member (17) to warm up in the air of the atmosphere before putting down said object, so as to liquefy said interface virtually instantaneously when said object is put down.

24. The method claimed in any of claims 21 to 23 when they are dependent on claims 3 and 8, **characterized in that** it comprises the step of choosing the electrical current applied to said local Peltier effect components (13, 15) as a function of the difference between the actual temperature of said pick-up member and said temperature set point (C).

25. The method claimed in any of claims 21 to 24 when they are dependent on claim 3, **characterized in that** said step of activating said heating means consists of applying a "heating" electrical current to said local Peltier effect components (13, 15).

26. The method claimed in any of claims 21 to 25 when they are dependent on claim 13 or 14, **characterized in that** it includes the step of spraying said object with said interface liquid before picking up said object.
